# EUROPÄISCHE PATENTSCHRIFT

(11) **EP 2 920 020 B1**
(45) Veröffentlichungstag und Bekanntmachung des Hinweises auf die Patenterteilung: **14.12.2016**
(21) Anmeldenummer: 13792596.2
(22) Anmeldetag: 14.11.2013
(51) Int. Cl.: B60L 3/00, B60L 3/04, B60L 11/18, H01R 13/639, H01R 13/70

(54) **VERRIEGELUNGSVORRICHTUNG ZUM VERRIEGELN VON ELEKTRISCHEN STECKERN**
LOCKING DEVICE FOR LOCKING ELECTRICAL PLUGS
DISPOSITIF DE VERROUILLAGE PERMETTANT DE VERROUILLER DES CONNECTEURS ÉLECTRIQUES MÂLES

(30) Priorität: 15.11.2012 DE 102012022413
(43) Veröffentlichungstag der Anmeldung: 23.09.2015
(73) Patentinhaber: Temtec Fahrzeugtechnik Entwicklungsgesellschaft mbH, D-83064 Raubling (DE)
(72) Erfinder: TEMMESFELD, Thomas, 80802 München (DE)
(74) Vertreter: Bauer, Friedrich
(86) Internationale Anmeldenummer: PCT/EP2013/003435
(87) Internationale Veröffentlichungsnummer: WO 2014/075802

(56) Entgegenhaltungen:
- EP-A2- 2 293 391
- EP-A2- 2 492 134

## Beschreibung

Die Erfindung betrifft eine Verriegelungsvorrichtung zum Verriegeln von elektrischen Steckern in Buchsen gemäß dem Oberbegriff des Anspruches 1.

Zum Aufladen von Elektrofahrzeugen werden diese über ein Ladekabel mit einer Ladestation verbunden, die an eine Stromquelle angeschlossen ist. Das Ladekabel weist hierzu an seinem fahrzeugseitigen Ende einen Stecker auf, der in eine am Fahrzeug vorgesehene Buchse (Steckdose) eingesteckt werden kann. Der Stecker kann sich auch am Fahrzeug und die Buchse am Ladekabel befinden. Eine Steckkupplungsverbindung kann auch zwischen Ladekabel und Ladestation vorgesehen sein.

Derartige Steckkupplungsverbindungen sollen während des Ladens verriegelt werden können, damit ausgeschlossen werden kann, dass das Ladekabel unbefugt vom Fahrzeug oder von der Ladestation gelöst werden kann. Dies spielt beim Aufladen von Fahrzeugen eine besondere Rolle, da die Fahrzeuge oft über eine längere Zeit, d.h. über viele Stunden, mit der Ladestation verbunden bleiben und sich der Fahrer während des Ladevorgangs in der Regel vom Fahrzeug entfernt. Es sind daher Sicherungseinrichtungen wünschenswert, die verhindern, dass das Ladekabel während des Ladevorgangs unbefugterweise von einem Fahrzeug entfernt und an ein anderes Fahrzeug angeschlossen wird. Weiterhin soll durch die Steckerverriegelung ausgeschlossen werden, dass der Stecker während des Ladens von der Buchse abgezogen werden kann, um einen Lichtbogen zu vermeiden.

Aus der DE 10 2010 023 784 A1 ist bereits eine Verriegelungsvorrichtung der eingangs genannten Art bekannt. Bei dieser bekannten Verriegelungsvorrichtung wird ein seitlich neben einer Buchse angeordneter, in Längsrichtung verschiebbarer Schieber über Gelenkhebel von einem Motor angetrieben, der gleichzeitig einen Verschlussdeckel zwischen einer Öffnungs- und Verschlussstellung schwenkt. Das Schiebeelement wirkt dabei mit einem Verriegelungsbolzen zusammen, der quer zum Schiebeelement mittels einer Verriegelungsbolzen-Führungskulisse zwischen einer Entriegelungsstellung und einer Verriegelungsstellung verschiebbar ist, in welcher der Verriegelungsbolzen durch eine Wand der Buchse hindurch tritt und dabei auch in eine Öffnung des eingesteckten Steckers hineinragt, so dass dieser nicht mehr herausgezogen werden kann. Diese bekannte Verriegelungsvorrichtung hat jedoch insbesondere dann, wenn sie für größere Antriebskräfte ausgebildet sein soll, einen relativ großen Raumbedarf. Weiterhin ist es häufig nicht erforderlich, zusammen mit der Verriegelungseinrichtung auch einen Verschlussdeckel zu betätigen.

Der Erfindung liegt daher die Aufgabe zu Grunde, eine Verriegelungsvorrichtung der eingangs genannten Art zu schaffen, die einen geringen Raumbedarf hat, dabei relativ hohe Antriebskräfte für den Verriegelungsbolzen entwickeln kann, möglichst universell einsetzbar ist und darüber hinaus so ausgebildet ist, dass auf einfache Weise eine manuelle Notentriegelung im Fall eines Motordefektes ermöglicht wird.

Diese Aufgabe wird erfindungsgemäß durch eine Verriegelungsvorrichtung mit den Merkmalen des Anspruches 1 gelöst. Vorteilhafte Ausführungsformen der Erfindung sind in den weiteren Ansprüchen beschrieben.

Bei der erfindungsgemäßen Verriegelungsvorrichtung ist das Drehelement als Drehkulissenelement ausgebildet, das eine um seine Drehachse herum angeordnete Führungskulisse mit mehreren Kulissenabschnitten aufweist, die unterschiedliche Steigungen haben. Weiterhin weist das Schiebelement ein in die Führungskulisse eingreifendes Kulisseneingriffsteil auf, das durch Drehen des Drehkulissenelements parallel zu Drehachse des Drehkulissenelements verschiebbar ist.

Mit Hilfe der erfindungsgemäßen Verriegelungsvorrichtung kann eine kompakte Antriebseinheit geschaffen werden, die gut in ein Fahrzeug integrierbar ist. Ferner kann die Verriegelungsvorrichtung kostengünstig hergestellt werden. Von weiterem Vorteil ist, dass trotz kleiner Baugröße große Antriebskräfte erzeugt werden können, die auf das Schiebeelement einwirken und von dort auf den Verriegelungsbolzen übertragen werden. Ferner kann die Verriegelungsvorrichtung ohne Weiteres derart ausgebildet werden, dass nicht nur eine Verriegelung zwischen Stecker und Buchse, sondern auch eine Verriegelung von Verschlussdeckeln ermöglicht wird.

Vorteilhafterweise besteht der Motor aus einem Getriebemotor, der ein Planetengetriebe zur Untersetzung der Motordrehzahl aufweist. Mittels eines derartigen Planetengetriebes kann eine besonders große Untersetzung herbeigeführt werden. Es genügen daher bereits relativ kleine und kostengünstige Motore, um große Antriebskräfte zu erzeugen. Alternativ zu einem derartigen Planetengetriebe ist es grundsätzlich jedoch auch möglich, andere Arten von Getriebe zu verwenden.

Vorteilhafterweise ist zwischen Motor und Drehkulissenelement ein Drehfreilauf vorgesehen, der die Drehbewegung des Motors von derjenigen des Drehkulissenelements über einen vorbestimmten Freilaufwinkelbereich entkoppelt. Mit Hilfe eines derartigen Drehfreilaufs kann der Motor zunächst über einen bestimmten Winkelbereich ohne starre Kopplung mit den nachfolgenden Kraftübertragungselementen, d.h. ohne großen Widerstand, anlaufen. Der Drehfreilauf ist daher für das Anlaufverhalten des Elektromotors und für das Freischlagen der Haftreibung der nachfolgenden Kraftübertragungselemente vorteilhaft.

Vorteilhafterweise umfasst der Drehfreilauf ein vom Motor antreibbares, drehbares Mitnehmerelement, das mindestens einen Anschlag aufweist, der an den beiden Enden des Freilaufwinkelbereichs mit einem Gegenanschlag des Drehkulissenelements in Mitnahmeeingriff bringbar ist. Hierdurch kann der Drehfreilauf auf konstruktiv einfache und kostengünstige Weise realisiert werden.

Vorteilhafterweise ist das Mitnehmerelement zumindest teilweise innerhalb des Drehkulissenelements angeordnet. Hierdurch kann eine sehr platzsparende Anordnung geschaffen werden.

Vorteilhafterweise weist die Führungskulisse des Drehkulissenelements mindestens einen steigungsfreien Nullhubabschnitt auf, der rechtwinklig zur Drehachse verläuft. Hierdurch kann auf einfache Weise verhindert werden, dass sich der Verriegelungsbolzen selbstständig zwischen seiner Verriegelungsstellung und Entriegelungsstellung bewegt, wenn der Motor ausgeschalten ist.

Vorteilhafterweise sind Motor, Mitnehmerelement und Drehkulissenelement hintereinander längs einer gemeinsamen Drehachse angeordnet. Hierdurch wird eine sehr platzsparende Anordnung geschaffen.

Vorteilhafterweise ist das Drehkulissenelement mit einem Notdrehelement zum manuellen Drehen des Drehkulissenelements verbunden. Hierdurch kann auf einfache Weise bei einem Ausfall des Motors eine manuelle, mechanische Notentriegelung geschaffen werden, die ein manuelles Überführen des Verriegelungsbolzens in seine Entriegelungsstellung ermöglicht.

Vorteilhafterweise ist das Schiebeelement parallel zur Drehachse des Drehkulissenelements verschiebbar und das Schiebeelement in Nachbarschaft des Motors angeordnet. Hierdurch kann eine sehr platzsparende Anordnung geschaffen und die Kopplung zwischen Schiebeelement und Drehkulissenelement auf einfache Weise mittels eines querverlaufenden Kulisseneingriffsteils, insbesondere eines am Schiebeelement befestigten Querbolzens, realisiert werden.

Vorteilhafterweise weist das Schiebeelement mindestens eine Verriegelungsbolzen-Führungskulisse auf. Weiterhin ist mindestens ein Verriegelungsbolzen relativ zum Schiebeelement verschiebbar gelagert und mit der Verriegelungsbolzen-Führungskulisse derart in Eingriff, dass der Verriegelungsbolzen durch eine Verschiebung des Schiebeelements in und außer Verriegelungseingriff mit dem Stecker oder der Buchse bewegbar ist. Hierdurch wird eine Anordnung geschaffen, bei welcher der Verriegelungsbolzen insbesondere quer zur Verschieberichtung des Schiebeelementes bewegbar ist. Zusätzlich zu einem derartigen Verriegelungsbolzen kann auch ein weiterer Verriegelungsbolzen vorgesehen sein, der vom Schiebeelement parallel zur Schieberichtung des Schiebelements bewegbar ist, um beispielsweise zusätzlich einen Verschlussdeckel zu verschließen.

Die Erfindung wird nachfolgend anhand der Zeichnungen beispielhaft näher erläutert. Es zeigen:
- Figur 1:: eine Explosionsdarstellung der erfindungsgemäßen Verriegelungsvorrichtung in räumlicher Darstellung;
- Figur 2:: die Einzelteile der Verriegelungsvorrichtung von Figur 1 in Seitenansicht;
- Figur 3:: eine Seitenansicht der Verriegelungsvorrichtung ohne Gehäusedeckel, wobei sich die Verriegelungsbolzen in ihrer Verriegelungsstellung befinden;
- Figur 4:: einen Schnitt längs der Linie IV-IV von Figur 3;
- Figur 5:: eine Seitenansicht der Verriegelungsvorrichtung ohne Gehäusedeckel, wobei sich die Verriegelungsbolzen in entriegelter Stellung befinden;
- Figur 6:: einen Schnitt längs der Linie VI-VI von Figur 5;
- Figur 7:: eine Abwicklung der Führungskulisse;
- Figuren 8a bis 8e:: schematische Draufsichten auf das Drehkulissenelement und das Mitnehmerelement zur Veranschaulichung möglicher Relativbewegungen;
- Figur 9:: eine Abwicklung einer zweiten Ausführungsform einer Führungskulisse;
- Figuren 10a bis 10e:: schematische Draufsichten auf das die Führungskulisse vom Figur 9 aufweisenden Drehkulissenelements und eines Mitnehmerelements zur Veranschaulichung möglicher Relativbewegungen;

- Figur 11:: ein Ausführungsbeispiel für die Kombination einer Verriegelungsvorrichtung mit einer Buchse, die mit Verschlusskappen abgedeckt werden kann;
- Figur 12:: ein weiteres Ausführungsbeispiel für die Kombination einer Verriegelungsvorrichtung mit einer Buchse;
- Figur 13:: ein weiteres Ausführungsbeispiel einer Kombination einer Verriegelungsvorrichtung mit einer Buchse für die Verriegelung eines mit einem Schnapphaken versehenen Steckers; und
- Figur 14:: das Ausführungsbeispiel von Figur 13, wobei sich der Stecker in verriegelter Stellung befindet.

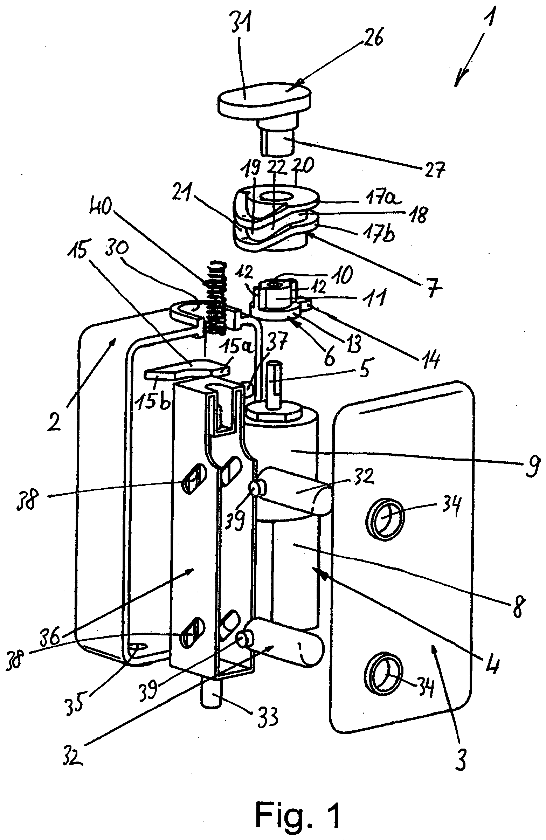

Aus Figur 1 ist eine Verriegelungsvorrichtung 1 mit einem schalenartigen Gehäuseunterteil 2 ersichtlich, das mittels eines Gehäusedeckels 3 verschlossen werden kann. Das Gehäuseunterteil 2 und der Gehäusedeckel 3 bilden zusammen ein im Wesentlichen quaderförmiges Gehäuse.

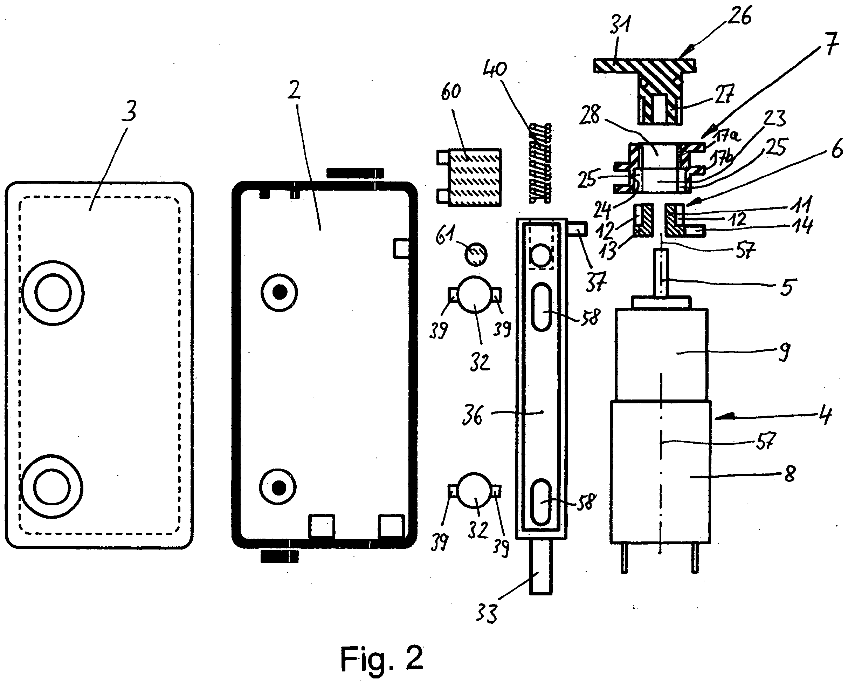

Innerhalb des Gehäuses sind ein Motor 4 mit einer Motorwelle 5, ein Mitnehmerelement 6 und ein Drehkulissenelement 7 in Längsrichtung einer Drehachse 57 des Motors 4 hintereinander angeordnet (Figur 2).

Beim Motor 4 handelt es sich um einen Elektromotor in Form eines kleinen Getriebemotors, der eine Motoreinheit 8 und ein fluchtend zur Motoreinheit 8 angeordnetes Planetengetriebe 9 umfasst. Ein Planetengetriebe 9 ist vorteilhaft, da es ein großes Untersetzungsverhältnis auf kleinstem Raum ermöglicht.

Das Mitnehmerelement 6 ist auf die Motorwelle 5 aufgesteckt und mit dieser drehfest verbunden. Hierzu weist das Mitnehmerelement 6 eine mittige Axialbohrung 10 auf. Weiterhin umfasst das Mitnehmerelement 6 einen zylindrischen Grundkörper 11. Von der Außenumfangsfläche des Grundkörpers 11 stehen zwei um 180° versetzt angeordnete Mitnehmeranschläge 12 in radialer Richtung vor. Diese Mitnehmeranschläge 12 sind als axial verlaufende Stege ausgebildet. An den Grundkörper 11 ist ein Scheibenkörper 13 angeformt, der sich auf der dem Motor 4 zugewandten Stirnseite des Grundkörpers 11 befindet und einen größeren Außendurchmesser als der Grundkörper 11 aufweist. Von diesem Scheibenkörper 13 steht in radialer Richtung ein Drehbegrenzungsanschlag 14 vor, der mit einem Gehäuseanschlagteil 15 zusammenwirkt.

Das Drehkulissenelement 7 umfasst eine zylindrische Hülse 16. Von der Außenumfangsfläche der Hülse 16 stehen radial nach außen zwei um die Drehachse 57 umlaufende parallel zueinander angeordnete Kulissenstege 17a, 17b vor, die axial zueinander beabstandet sind und beidseitig eine Führungskulisse 18 begrenzen. Die Führungskulisse 18 ist somit um die Mittelachse des Drehkulissenelements 7 und damit um die Drehachse 57 herum angeordnet. Zweckmäßigerweise erstrecken sich die Kulissenstege 17a, 17b und damit die Führungskulisse 18 um den ganzen Außenumfang der Hülse 16 herum, d.h. über einen Winkelbereich von 360°.

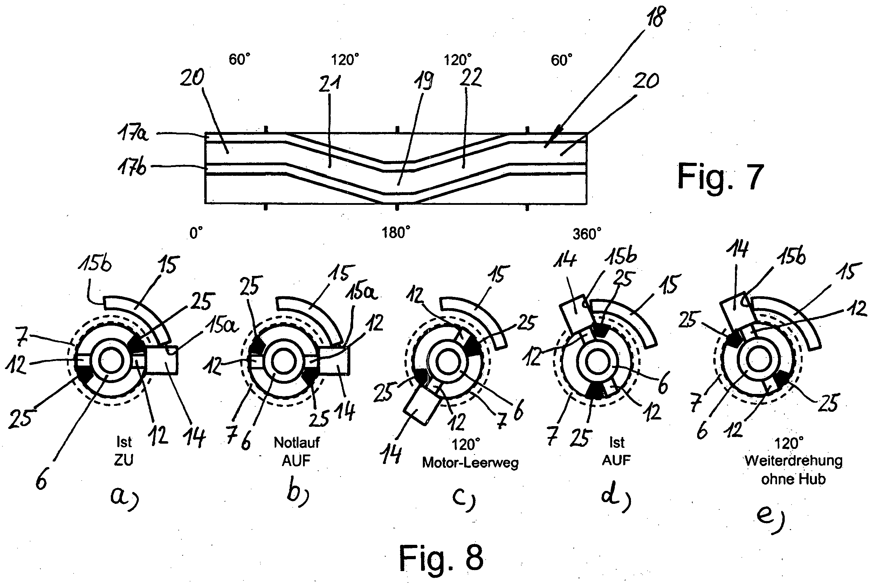

Die Führungskulisse 18 umfasst, wie aus der Figur 1 und der Kulissenabwicklung von Figur 7 ersichtlich, mehrere Kulissenabschnitte mit unterschiedlichen Steigungen, nämlich zwei Nullhubabschnitte 19, 20 sowie zwei Steigungsabschnitte 21, 22. Die beiden Nullhubabschnitte 19, 20 verlaufen rechtwinklig zur Drehachse des Drehkulissenelements 7, d.h., haben eine Steigung von 0°, und sind in axialer Richtung zueinander versetzt. Die Steigungsabschnitte 21, 22 verlaufen in dem in Figur 7 gezeigten Ausführungsbeispiel in einem Winkel von -15° bzw. + 15° zu den angrenzenden Nullhubabschnitten 19, 20. Winkel bzw. Steigungen der Steigungsabschnitte 21, 22 zwischen -10° und -40° bzw. zwischen +10° und + 40° sind vorteilhaft. Weiterhin sind die beiden Nullhubabschnitte 19, 20 jeweils beidseitig durch die beiden Steigungsabschnitte 21, 22 verbunden, so dass sich eine umlaufende Führungskulisse 18 ergibt. Die einzelnen Kulissenabschnitte verlaufen geradlinig, können jedoch auch unterschiedlichste Kurvenformen und Steigungen haben.

Die Hülse 16 des Drehkulissenelements 7 weist über einen Teil ihrer Länge einen Hohlraum 23 auf, in den der Grundkörper 11 zusammen mit den Mitnehmeranschlägen 12 axial eingeführt werden kann. Der Hohlraum 23 wird von einer Innenumfangswand 24 begrenzt. Von dieser Innenumfangswand 24 stehen radial nach innen zwei stegartige Gegenanschläge 25 vor, die in den Drehbereich der Mitnehmeranschläge 12 hineinragen. Die Gegenanschläge 25 sind einander gegenüber angeordnet, d.h. um 180° versetzt. Das Drehkulissenelement 7 ist damit derart drehbar auf dem und relativ zum Mitnehmerelement 6 angeordnet, dass sich der vom Motor 4 angetriebene Mitnehmer 6 um einen bestimmten Freilaufwinkelbereich im gezeigten Beispiel um 120°, relativ zum Drehkulissenelement 7 drehen kann, ohne dass das Drehkulissenelement 7 mitgedreht wird. Zwischen dem Mitnehmerelement 6 und dem Drehkulissenelement 7 ist damit ein Drehfreilauf vorgesehen, der die Drehbewegung des Motors 4 von derjenigen des Drehkulissenelements 7 über den vorbestimmten Freilaufwinkelbereich entkoppelt. Am Ende des Freilaufwinkelbereichs schlagen die Mitnehmeranschläge 12 an den Gegenanschlägen 25 des Drehkulissenelements 7 an, wodurch das Drehkulissenelement 7 mitgedreht wird.

Die Drehbewegung des Mitnehmerelements 6 und damit diejenige des Motors 4 wird wiederum durch den Drehbegrenzungsanschlag 14 begrenzt, der je nach Drehrichtung an den Endflächen 15a, 15b des Gehäuseanschlagteils 15 anschlagen kann. Das Mitnehmerelement 6 hat im gezeigten Ausführungsbeispiel einen freien Drehwinkelbereich zwischen den Endflächen 15a, 15b von ca. 240°.

Mit dem Drehkulissenelement 7 ist ein Notdrehelement 26 drehfest verbunden. Dieses Notdrehelement 26 umfasst einen zylindrischen Körper 27, der in axialer Richtung in einem entsprechenden Hohlraum 28 des Drehkulissenelements 7 eingesteckt werden kann und beispielsweise über eine Nut-Feder-Verbindung drehfest mit dem Drehkulissenelement 7 verbunden ist. An diesen zylindrischen Körper 27 schließt ein zylindrischer Lagerabschnitt 29 an, mit dem das Notdrehelement 26 in einer Lageröffnung 30 des Gehäuseunterteils 2 drehbar gelagert ist. Das Drehkulissenelement 7 ist somit über den Körper 27 des Notdrehelements 26 drehbar im Gehäuse gelagert. Weiterhin weist das Notdrehelement 26 ein Griffteil 31 auf, das außerhalb des Gehäuses angeordnet ist. Das Notdrehelement 26 dient dazu, bei Ausfall des Motors 4 das Drehkulissenelement 7 derart manuell drehen zu können, dass die Verriegelungsvorrichtung entriegelt wird.

Die Verriegelung und Entriegelung eines in Figur 1 nicht dargestellten Steckers erfolgt über zwei zueinander parallele Verriegelungsbolzen 32, die quer zur Längs- und Drehachse des Motors 4 angeordnet sind oder über einen weiteren Verriegelungsbolzen 33, der parallel zur Längs-und Drehachse 57 des Motors 4 angeordnet ist. Aufgrund dieser Mehrzahl von Verriegelungsbolzen 32,33 ist es möglich, die Verriegelungsvorrichtung für eine Vielzahl unterschiedlicher Steckverbindungen zu verwenden und die Verriegelungsvorrichtung je nach Verfügbarkeit des Einbauraums in der jeweils optimalen Weise einzubauen. Im Rahmen der Erfindung ist jedoch auch eine geringere Anzahl von Verriegelungsbolzen, insbesondere ein einziger Verriegelungsbolzen 32 oder 33, ausreichend.

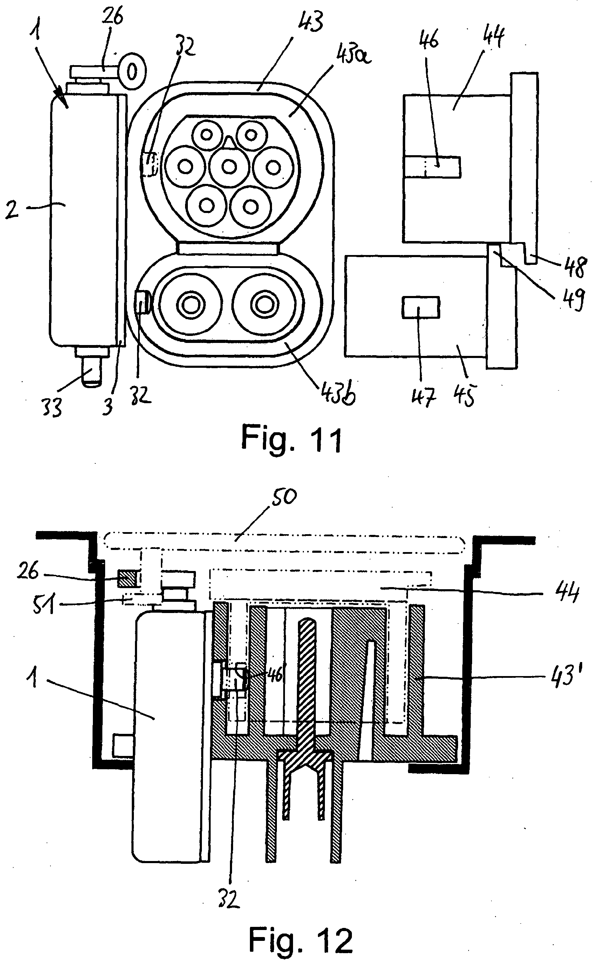

Die Verriegelungsbolzen 32 durchdringen Öffnungen 34 des Gehäusedeckels 3 und sind in diesem verschiebbar gelagert. Der Verriegelungsbolzen 33 durchdringt eine Öffnung 35 im Gehäuseunterteil 2 und ist in diesem ebenfalls verschiebbar gelagert. In der Verriegelungsstellung stehen die Verriegelungsbolzen 32, 33 über den Gehäusedeckel 3 bzw. das Gehäuseunterteil 2 vor und wirken verriegelnd mit einem Stecker zusammen, wie anhand der Figuren 11 bis 14 später noch näher beschrieben wird. In der Entriegelungsstellung sind die Verriegelungsbolzen 32, 33 dagegen soweit in das Gehäuse zurückgezogen, dass sie aus dem Einsteckbereich des Steckers gelangen.

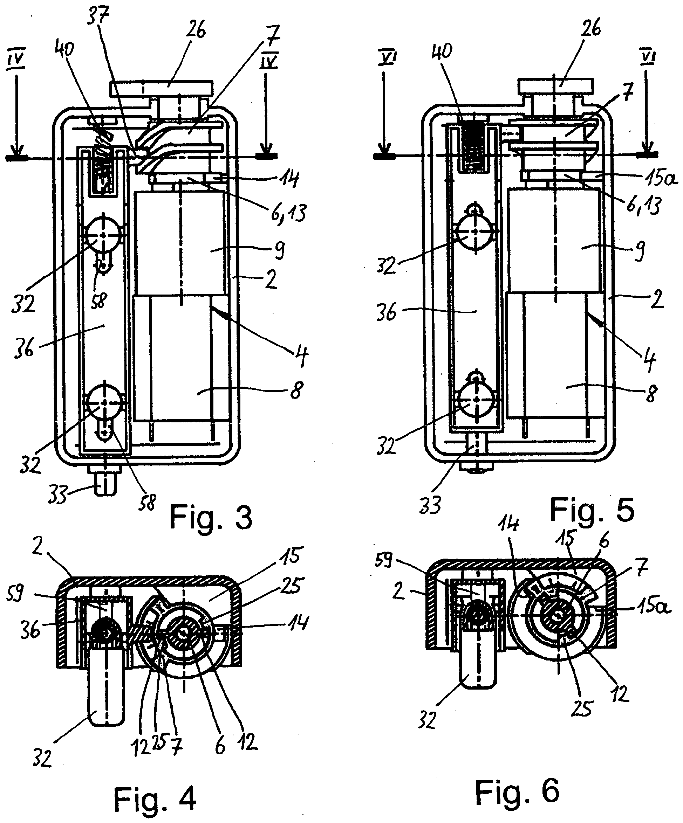

Die Verschiebung der Verriegelungsbolzen 32 erfolgt über ein längliches Schiebeelement 36, das parallel zum Motor 4 unmittelbar neben diesem angeordnet und in Langlochführungen 58 an Führungsbolzen 59 (Figuren 3,4) längsverschiebbar und parallel zur Drehachse 57 verschiebbar ist. Die Führungsbolzen 59 ragen auch in Längsbohrungen der Verriegelungsbolzen 32 hinein, so dass die Verriegelungsbolzen 32 auf den Führungsbolzen 59 längsverschiebbar geführt sind.

Am Schiebeelement 36 ist ein Kulisseneingriffsteil 37 in Form eines Mitnehmerbolzens befestigt, der seitlich am Schiebeelement 36 befestigt ist und seitlich vorsteht. Dieses Kulisseneingriffsteil 37 bildet einen "Kulissenstein", der in die Führungskulisse 18 des Drehkulissenelements 7 eingreift. Durch Drehen des Drehkulissenelements 7 wird somit das Kulisseneingriffsteil 37 und damit auch das Schiebeelement 36 in Axialrichtung des Schiebelements 36 verschoben.

Da der Verriegelungsbolzen 33 am stirnseitigen Ende des Schiebeelements 36 direkt und starr befestigt ist, wird die Verschiebebewegung des Schiebeelements 36 unmittelbar auf den Verriegelungsbolzen 33 übertragen.

Die Verriegelungsbolzen 32 werden dagegen mittels zweier Verriegelungsbolzen-Führungskulissen 38 bewegt, die im Schiebeelement 36 schräg verlaufend vorgesehen sind. In diese Verriegelungsbolzen-Führungskulissen 38 greifen Führungsstifte 39 der Verriegelungsbolzen 32 ein. Da die Verriegelungsbolzen-Führungskulissen 38 schräg zur Verschieberichtung der Verriegelungsbolzen 32 verlaufen, bewirkt eine Längsverschiebung des Schiebelements 36 eine hierzu rechtwinklig gerichtete Längsverschiebung der Verriegelungsbolzen 32.

Zweckmäßigerweise weist das Schiebeelement 36 einen U-förmigen Querschnitt auf, so dass die Verriegelungsbolzen-Führungskulissen 38 in zwei gegenüberliegenden Seitenwänden des Schiebeelements 36 vorgesehen und die Verriegelungsbolzen 32 beidseitig mittels je zwei Führungsstiften 39 geführt sein können.

Das Schiebeelement 36 ist über eine Feder 40 in Verriegelungsstellung vorgespannt. Diese Feder 40 stützt sich einerseits am Schiebeelement 36 und andererseits am Gehäuseunterteil 2 ab.

Die Position des Schiebeelements 36 kann über einen am Gehäusedeckel 3 vorgesehenen Sensor 60 erfasst werden, der mit einem am Schiebeelement 36 befestigten Magneten 61 zusammenwirkt.

Anhand der Figuren 3 bis 8 wird im Folgenden die Funktionsweise der Verriegelungsvorrichtung beschrieben. Ausgangsstellung ist die in den Figuren 3 und 4 gezeigte Verriegelungsstellung, in welcher die beiden Verriegelungsbolzen 32 bzw. der Verriegelungsbolzen 33 über das Gehäuse vorstehen. In dieser Verriegelungsstellung befindet sich das Drehkulissenelement 7 in einer Drehstellung, in der das Kulisseneingriffsteil 37 des Schiebeelements 36 in dem in den Figuren 3 und 7 unteren Nullhubabschnitt 19 der Führungskulisse 18 befindet. Mitnehmerelement 6 und Drehkulissenelement 7 befinden sich in einer Stellung, die in Figur 8a dargestellt ist. Der Drehbegrenzungsanschlag 14 des Mitnehmerelements 6 liegt an der Endfläche 15a des Gehäuseanschlagteils 15 an.

Wird nun der Motor 4 gestartet, um die Verriegelungsvorrichtung zu entriegeln, wird das Mitnehmerelement 6 vom Motor 4 zunächst über einen Freilaufwinkelbereich von 120°, der in Figur 8c als Motor-Leerweg bezeichnet ist, im Uhrzeigersinn in die in Figur 8c gezeigte Stellung gedreht, ohne dass das Drehkulissenelement 7 mitgedreht wird. Das Kulisseneingriffsteil befindet sich daher immer noch im Bereich des unteren Nullhubabschnitts 19, d.h. die Verriegelungsbolzen 32, 33 sind noch nicht verschoben worden. Wird anschließend das Mitnehmerelement 6 mittels des Motors 4 weiter im Uhrzeigersinn in die in Figur 8d gezeigte Stellung gedreht, nehmen die Mitnehmeranschläge 12 die Gegenanschläge 25 des Drehkulissenelements 7 mit, so dass das Drehkulissenelement 7 und damit die Führungskulisse 18 gedreht wird. Diese Drehbewegung führt dazu, dass das Kulisseneingriffsteil 37 über den Steigungsabschnitt 22 in Axialrichtung des Drehkulissenteils 7 und des Schiebeelements 36 verschoben wird, bis es in den weiteren (oberen) Nullhubabschnitt 20 der Führungskulisse 18 gelangt. Das Schiebeelement 36 wird dadurch in die in Figur 5 gezeigte Stellung angehoben, d.h. die Verriegelungsbolzen 32, 33 werden in das Gehäuse eingezogen. Die Drehbewegung des Motors 4 wird nach insgesamt 240° durch den Drehbegrenzungsanschlag 14 begrenzt, der an der Endfläche 15b des Gehäuseanschlagteils 15 anschlägt. In der in Figur 8d gezeigten Stellung befindet sich die Verriegelungsvorrichtung somit in ihrer Entriegelungsstellung.

Zum erneuten Verriegeln wird das Mitnehmerelement 6 zunächst wieder, ausgehend von der in Figur 8d gezeigten Stellung, über einen Freilaufwinkelbereich von 120° im Gegenuhrzeigersinn zurück geschwenkt, ohne dass das Drehkulissenelement 7 mitgedreht wird. Beim Weiterdrehen im Uhrzeigersinn nehmen dagegen die Mitnehmeranschläge 12 die Gegenanschläge 25 des Drehkulissenelements 7 mit, bis die in Figur 8a gezeigte Stellung erreicht ist. Durch diese Drehbewegung wird das Kulisseneingriffsteil 37 von der oberen Nullhubstellung 20 über den Steigungsabschnitt 22 in die untere Nullhubstellung 19 zurückgeführt, wodurch das Schiebeelement 36 in die in Figur 3 gezeigte Stellung, d.h. nach unten, verschoben wird und die Verriegelungsbolzen 32, 33 aus dem Gehäuse ausgefahren werden.

In Figur 8b ist dargestellt, dass das Drehkulissenelment 7, ausgehend von der in Figur 8a gezeigten Verriegelungsstellung, mittels des Notdrehelements 26 manuell im Gegenuhrzeigersinn über einen Freilaufwinkelbereich von 120° in die Entriegelungsstellung gedreht werden kann, wenn der Motor ausfällt. Bei dieser Drehbewegung wandert das Kulisseneingriffsteil 37 vom unteren Nullhubabschnitt 19 über den Steigungsabschnitt 21 in den oberen Nullhubabschnitt 20. Diese Drehbewegung ist in Figur 8b mit "Notlauf AUF" bezeichnet.

In Figur 8e ist gezeigt, dass, ausgehend von der in Figur 8e gezeigten Entriegelungsstellung, in der sich das Kulisseneingriffsteil 37 im oberen Nullhubabschnitt 20 befindet, bei Ausfall des Motors 4 das Drehkulissenelement 7 über einen Freilaufwinkelbereich von 120° im Uhrzeigersinn manuell weitergedreht werden kann, ohne dass das Schiebeelement 36 und damit die Verriegelungsbolzen 32, 33 verschoben werden. Die in Figur 7 dargestellte Form der Führungskulisse 18 ist daher derart ausgelegt, dass nur eine Notentriegelung möglich ist, jedoch keine Notverriegelung.

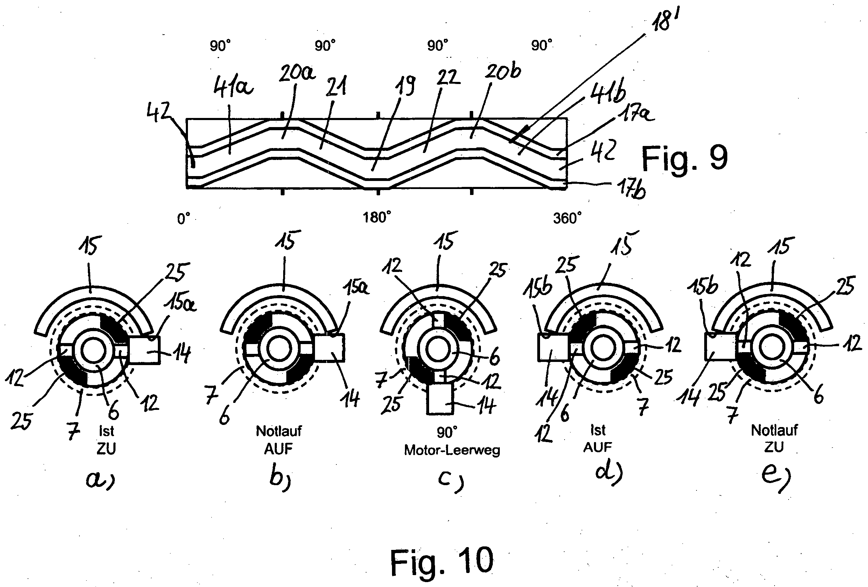

Anhand der Figuren 9 und 10 wird nachfolgend eine andere Ausführungsform einer Führungskulisse 18' beschrieben, die zusätzlich zu einer Notentriegelung auch eine Notverriegelung ermöglicht. Diese Führungskulisse 18' weist in gleicher Weise wie die Führungskulisse 18 einen unteren Nullhubabschnitt 19 auf, an den zwei Steigungsabschnitte 21, 22 anschließen. An den Steigungsabschnitt 21 schließt ein oberer Nullhubabschnitt 20a an, während an den Steigungsabschnitt 22 ein oberer Nullhubabschnitt 20b anschließt. An den oberen Nullhubabschnitt 20a schließt sich wiederum ein nach unten führender Steigungsabschnitt 41a an, während sich an den oberen Nullhubabschnitt 20b ein schräg nach unten führender Steigungsabschnitt 41b anschließt. Die Steigungsabschnitte 41a, 41b sind mittels eines unteren Nullhubabschnitts 42 miteinander verbunden.

Die in Figur 9 abgewinkelt gezeigte Führungskulisse 18' ermöglicht die in den Figuren 10a bis 10e gezeigte Drehbewegungen des Mitnehmerelements 6 und Drehkulissenelement 7. Die beiden gegenüberliegenden Gegenanschläge 25 des Drehkulissenelements 7 sind dabei derart ausgebildet, dass ein Freilaufwinkelbereich von 90° ermöglicht wird.

In Figur 10a ist wiederum eine Relativstellung zwischen Mitnehmerelement 6 und Drehkulissenelement 7 gezeigt, in welcher sich die Verriegelungsvorrichtung in der Verriegelungsstellung befindet, d.h. das Kulisseneingriffsteil 37 befindet sich im unteren Nullhubabschnitt 19. Ausgehend von der in Figur 10a gezeigten Stellung ist es möglich, das Drehkulissenelement 7 manuell mittels dem Notdrehelement 26 bei Ausfall des Motors 4 im Gegenuhrzeigersinn um 90° in die in Figur 10b gezeigte Stellung zu drehen. Hierbei wandert das Kulisseneingriffsteil 37 über den Steigungsabschnitt 21 in den oberen Nullhubabschnitt 20a. Die Verriegelungsvorrichtung wird dadurch entriegelt.

Ist der Motor 4 dagegen intakt, können, ausgehend von der in Figur 10a gezeigten Stellung, der Motor und das Mitnehmerelement 6 zunächst über einen Freilaufwinkelbereich von 90° im Uhrzeigersinn drehen, ohne dass das Drehkulissenelement 7 mitgedreht wird. Dreht der Motor 4 weiter im Uhrzeigersinn, bis der Drehbegrenzungsanschlag 14 an der Endfläche 15b des Gehäuseanschlagteils 15 anschlägt, wird das Drehkulissenelement 7 um weitere 90° mitgedreht. Das Kulisseneingriffsteil 37 wandert längs des Steigungsabschnitts 22 in den oberen Nullhubabschnitt 20b und überführt damit die Verriegelungsvorrichtung in die Entriegelungsstellung. Fällt in dieser Entriegelungsstellung der Motor 4 aus, ist es möglich, das Drehkulissenelement 7 manuell im Uhrzeigersinn um 90° in die in Figur 10e gezeigte Verriegelungsstellung weiterzudrehen.

In Figur 11 ist ein erstes Anwendungsbeispiel der Verriegelungsvorrichtung 1 dargestellt. Es ist eine stirnseitige Ansicht einer Buchse 43 (Steckdose) gezeigt, die zwei unterschiedliche Steckeraufnahmen 43a, 43b umfasst, um Anschlussmöglichkeiten sowohl für Wechselstrom als auch für Gleichstrom zu haben. Bei diesem Ausführungsbeispiel ist die Verriegelungsvorrichtung 1 quer zur Buchse 43 angeordnet, d.h. die Längsachsen des. Motors 4 und des Schiebeelements 36 verlaufen quer zur Längsachse der Buchse 43. Es ist ersichtlich, dass die beiden Verriegelungsbolzen 32 seitlich sowohl in die Steckeraufnahme 43a als auch in die Steckeraufnahme 43b hinein bewegt werden können, um einen nicht dargestellten Stecker zu verriegeln. Die Verriegelungsbolzen 32 greifen dabei in seitliche Wandöffnungen des Steckers ein.

Aus Figur 11 sind weiterhin zwei Verschlusskappen 44, 45 zum Verschließen der Buchse 43 in einer um 90° gedrehten Stellung, d.h. in einer Seitenansicht dargestellt. Die Verschlusskappen 44, 45 weisen in ihrer Wand Wandöffnungen 46, 47 auf, die derart ausgebildet und angeordnet sind, dass nach dem Einstecken der Verschlusskappen 44, 45 in die Steckeraufnahmen 43a, 43b die Verriegelungsbolzen 32 in diese Wandöffnungen 46, 47 eingreifen und die Verschlusskappen 44, 45 verriegeln können. Weiterhin können die Verschlusskappen 44, 45 einander überlappende Randbereiche 48, 49 aufweisen, so dass die Verschlusskappe 45 erst nach Entfernen der Verschlusskappe 44 abgezogen werden kann. Der weitere Verriegelungsbolzen 33 könnte bei diesem Ausführungsbeispiel für eine Verriegelung einer Karosserie-Außenklappe verwendet werden.

Figur 12 zeigt ein weiteres Anwendungsbeispiel für die Verriegelung eines Wechselstromkonnektors. Bei diesem Anwendungsbeispiel ist die Verriegelungsvorrichtung 1 in Längsrichtung der Buchse 43' eingebaut. In die Buchse 43' ist eine strichpunktiert dargestellte Verschlusskappe 44 eingesteckt. Die Verriegelungsvorrichtung 1 weist lediglich einen quer angeordneten Verriegelungsbolzen 32 auf, der in seiner Verriegelungsstellung in eine seitliche Wandöffnung 46 der Verschlusskappe 44 eingreift. Anstelle der Verschlusskappe 44 kann in gleicher Weise ein in die Buchse 43' eingesteckter Elektrostecker verriegelt werden. Weiterhin ist bei diesem Anwendungsbeispiel ersichtlich, dass das Notdrehelement 26 zusätzlich für eine Verriegelung einer Karosserie-Außenklappe 50 verwendet werden kann, indem das Notdrehelement 26 in einer bestimmten Drehstellung einen Verriegelungshaken 51 der Karosserie-Außenklappe 50 übergreift. In dieser Drehposition kann die Karosserie-Außenklappe 50 nicht hoch geschwenkt werden.

Wird die Verriegelungsvorrichtung 1 dagegen in die Entriegelungsstellung gebracht, wird das Notdrehelement 26 derart gedreht, dass die Karosserie-Außenklappe 50 frei hochgeschwenkt werden kann.

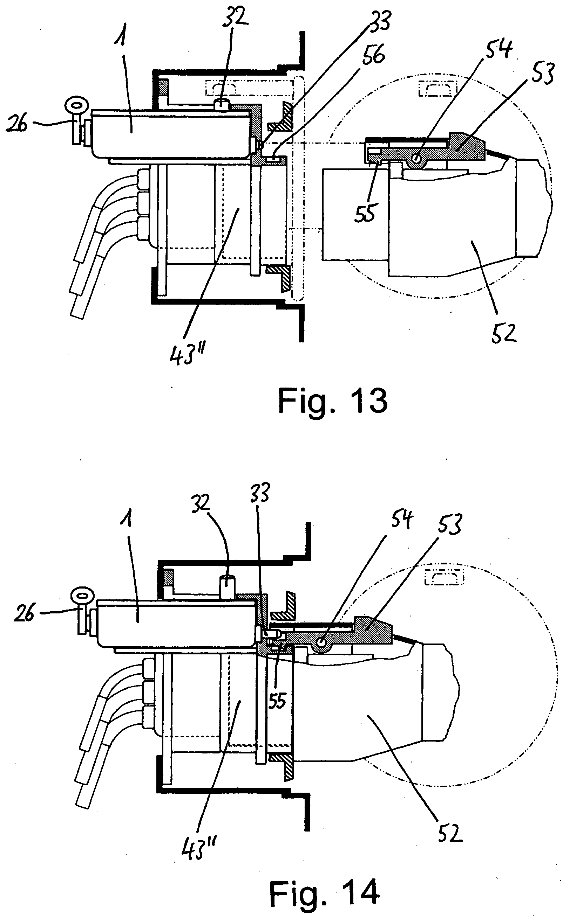

Die Figuren 13 und 14 zeigen ein weiteres Anwendungsbeispiel der erfindungsgemäßen Verriegelungsvorrichtung 1. Bei diesem Ausführungsbeispiel ist die Verriegelungsvorrichtung 1 längs neben der Buchse 43" eingebaut. Bei diesem Ausführungsbeispiel wird ein Stecker 52 verwendet, der einen Schnapphaken 53 aufweist. Der Schnapphaken 53 ist um einen quer zur Längsrichtung des Steckers 52 verlaufende Schwenkachse 54 schwenkbar und weist an seinem vorderen Ende einen Verriegelungshaken 55 auf, der im eingesteckten Zustand des Steckers 52 mit einer Ausnehmung 56 in der Umfangswand der Buchse 43" in Verriegelungseingriff bringbar ist. Die Verriegelungsvorrichtung 1 kann nun derart angeordnet sein, dass der Verriegelungsbolzen 33, der in Axialrichtung des Schiebeelements 36 bewegbar ist, in seiner Verriegelungsstellung den Schnapphaken 53 an seinem vorderen Ende derart übergreift, dass ein Schwenken des Schnapphakens 53 in seine Öffnungsstellung gesperrt wird.

Im Rahmen der Erfindung sind eine Vielzahl von Variationen möglich. Beispielsweise ist es möglich, die Verriegelungsvorrichtung 1 nicht an einer Buchse, sondern an einem Stecker anzubringen, der an einem Fahrzeug, einer Ladestation oder dergleichen angeordnet ist. Die Führungskulisse 18, 18' muss nicht mehrere Steigungsabschnitte 21, 22 aufweisen. Gemäß einer Minimalausführung genügt es, wenn zwei in Axialrichtung des Drehkulissenelements 7 versetzte Nullhubabschnitte 19, 20 und ein dazwischen angeordneter Steigungsabschnitt 21 oder 22 vorgesehen ist. Es ist auch ohne weiteres möglich, eine größere Anzahl oder andere Anordnung von Kulissenabschnitten als die anhand der Ausführungsbeispiele gezeigten Kulissenabschnitte 19, 20, 20a, 20b, 21, 22, 41a, 41b vorzusehen. Notdrehelement 26 und Drehkulissenelement 7 können auch aus einem einzigen Teil bestehen. Es ist auch nicht unbedingt erforderlich, dass zwei um 180° versetzt angeordnete Mitnehmeranschläge 12 und/oder Gegenanschläge 25 vorgesehen sind. Ein einziger Mitnehmeranschlag 12 und/oder Gegenanschlag 25 kann genügen. Das Notdrehelement 26 kann entfallen, wenn keine Notentriegelung gewünscht wird. Weiterhin kann die Notentriegelung auch auf andere Weise gelöst werden, beispielsweise indem die Führungskulisse 18, 18' nur einen einzigen Kulissensteg 17b aufweist, gegen den das Kulisseneingriffsteil 37 mittels der Feder 40 gedrückt wird, so dass das Schiebeelement 36 entgegen der Vorspannkraft der Feder 40 manuell zurückgezogen werden kann.

Weiterhin sind von der Erfindung auch Ausführungsformen umfasst, bei denen das Drehkulissenelement 7 nicht auf oder fluchtend zur Motorwelle 5 angeordnet ist, sondern neben dem Motor 4. Besonders zweckmäßig ist es hierbei, wenn das Drehkulissenelement 7 auf einer Welle angeordnet ist, die parallel zur Motorwelle 5 angeordnet und drehbar im Gehäuse, insbesondere am Gehäuseunterteil 2, gelagert ist. In diesem Fall sind Motorwelle 5 und die Drehkulissenelementwelle zweckmäßigerweise mittels eines stark untersetzenden Getriebes, das beispielsweise ein Stirnradgetriebe sein kann, in Drehverbindung. Dieses Getriebe muss mit dem Motor 4 keine Einheit bilden, sondern kann außerhalb des eigentlichen Motorgehäuses angeordnet sein. Weiterhin ist es auch möglich, dass Drehkulissenelement 7 und Schiebeelement 36 zueinander fluchtend angeordnet sind und sich das Drehkulissenelement 7 zumindest teilweise in das Schiebeelement 36 hinein erstreckt. In diesem Fall kann die Kopplung zwischen Drehkulissenelement 7 und Schiebeelement 36 durch mindestens ein Kulisseneingriffsteil 37, vorzugsweise zwei gegenüberliegende Kulisseneingriffsteile 37, erfolgen, das (die) sich von der Innenwand des Schiebeelements 36 nach innen erstreckt (erstrecken) und in die Führungskulisse 18 des Drehkulissenelements 7 eingreift (eingreifen). Bei dieser letztgenannten Ausführungsform ist es auch zweckmäßig, wenn das Notdrehelement 26 zum manuellen Drehen des Drehkulissenelements 7 auf der Drehkulissenelementwelle drehfest befestigt ist. Anstatt am Schiebeelement 36 kann der Magnet 61 auch auf dem Drehkulissenelement 7 befestigt werden und der dazugehörige Sensor 60, insbesondere ein Hallsensor, benachbart hierzu am Gehäuse angeordnet sein.

## Patentansprüche

1. Verriegelungsvorrichtung zum Verriegeln von elektrischen Steckern in Buchsen (43, 43', 43"), mit
- einem Motor (4),
- einem vom Motor (4) in Umdrehung versetzbaren Drehelement,
- einem mit dem Drehelement in Wirkverbindung stehenden Schiebeelement (36),
- mindestens einem Verriegelungsbolzen (32, 33), der von dem Schiebeelement (36) zwischen einer Entriegelungsstellung und einer Verriegelungsstellung bewegbar ist, in welcher der Stecker (52) relativ zur Buchse (43, 43', 43") verriegelt ist,
**dadurch gekennzeichnet, dass** das Drehelement als Drehkulissenelement (7) ausgebildet ist, das eine um seine Drehachse herum angeordnete Führungskulisse (18, 18') mit mehreren Kulissenabschnitten (19, 20, 20a, 20b, 21, 22, 41a, 41b) aufweist, die unterschiedliche Steigungen haben, und dass das Schiebeelement (36) ein in die Führungskulisse (18, 18') eingreifendes Kulisseneingriffsteil (37) aufweist, das durch Drehen des Drehkulissenelements (7) parallel zur Drehachse des Drehkulissenelements (7) verschiebbar ist.

2. Verriegelungsvorrichtung nach Anspruch 1, **dadurch gekennzeichnet, dass** der Motor (4) aus einem Getriebemotor besteht, der ein Planetengetriebe (9) zur Untersetzung der Motordrehzahl aufweist.

3. Verriegelungsvorrichtung nach Anspruch 1 oder 2, **dadurch gekennzeichnet, dass** zwischen Motor (4) und Drehkulissenelement (7) ein Drehfreilauf vorgesehen ist, der die Drehbewegung des Motors (4) von derjenigen des Drehkulissenelements (7) über einen vorbestimmten Freilaufwinkelbereich entkoppelt.

4. Verriegelungsvorrichtung nach Anspruch 3, **dadurch gekennzeichnet, dass** der Drehfreilauf ein vom Motor (4) antreibbares, drehbares Mitnehmerelement (6) umfasst, das mindestens einen Mitnehmeranschlag (12) aufweist, der an den beiden Enden des Freilaufwinkelbereichs mit einem Gegenanschlag (25) des Drehkulissenelements (7) in Mitnahmeeingriff bringbar ist.

5. Verriegelungsvorrichtung nach Anspruch 4, **dadurch gekennzeichnet, dass** das Mitnehmerelement (6) zumindest teilweise innerhalb des Drehkulissenelements (7) angeordnet ist.

6. Verriegelungsvorrichtung nach einem der vorhergehenden Ansprüche, **dadurch gekennzeichnet, dass** die Führungskulisse (18, 18') des Drehkulissenelements (7) mindestens einen steigungsfreien Nullhubabschnitt (19, 20, 20a, 20b) aufweist, der rechtwinklig zur Drehachse verläuft.

7. Verriegelungsvorrichtung nach einem der vorhergehenden Ansprüche, **dadurch gekennzeichnet, dass** Motor (4), Mitnehmerelement (6) und Drehkulissenelement (7) hintereinander längs einer gemeinsamen Drehachse (57) angeordnet sind.

8. Verriegelungsvorrichtung nach einem der vorhergehenden Ansprüche, **dadurch gekennzeichnet, dass** das Drehkulissenelement (7) mit einem Notdrehelement (26) zum manuellen Drehen des Drehkulissenelements (7) verbunden ist.

9. Verriegelungsvorrichtung nach einem der vorhergehenden Ansprüche, **dadurch gekennzeichnet, dass** das Schiebeelement (36) parallel zur Drehachse (57) des Drehkulissenelements (7) verschiebbar ist.

10. Verriegelungsvorrichtung nach einem der vorhergehenden Ansprüche, **dadurch gekennzeichnet, dass** das Schiebeelement (36) in Nachbarschaft des Motors (4) angeordnet ist.

11. Verriegelungsvorrichtung nach einem der vorhergehenden Ansprüche, **dadurch gekennzeichnet, dass** das Schiebeelement (36) mindestens eine Verriegelungsbolzen-Führungskulisse (38) aufweist, und dass der Verriegelungsbolzen (32) relativ zum Schiebeelement (36) verschiebbar gelagert und mit der Verriegelungsbolzen-Führungskulisse (38) derart in Eingriff ist, dass der Verriegelungsbolzen (32) durch eine Verschiebung des Schiebeelements (36) in und außer Verriegelungseingriff mit dem Stecker (52) oder der Buchse (43, 43', 43") bewegbar ist.

12. Verriegelungsvorrichtung nach einem der vorhergehenden Ansprüche, **dadurch gekennzeichnet, dass** am Schiebeelement (36) mindestens ein Verriegelungsbolzen (33) fest angebracht ist.

## Claims

1. Locking device for locking electrical plugs in sockets (43, 43', 43"), comprising
- a motor (4),
- a rotary element which can be set in rotation by the motor (4),
- a slide element (36) which is operatively connected to the rotary element,
- at least one locking bolt (32, 33) which can be moved by the slide element (36) between an unlocking position and a locking position in which the plug (52) is locked relative to the socket (43, 43', 43"),
**characterised in that** the rotary element is formed as a rotary link element (7) which comprises a guide link (18, 18') which is arranged around the rotational axis thereof and comprises a plurality of link portions (19, 20, 20a, 20b, 21, 22, 41 a, 41 b) which have different inclinations, and **in that** the slide element (36) comprises a link engagement part (37) which engages in the guide link (18, 18') and can move in parallel with the rotational axis of the rotary link element (7) by rotating the rotary link element (7).

2. Locking device according to claim 1, **characterised in that** the motor (4) consists of a geared motor which comprises a planetary gear train (9) for reducing the motor speed.

3. Locking device according to either claim 1 or claim 2, **characterised in that** a rotary free-wheel is provided between the motor (4) and the rotary link element (7) and decouples the rotational movement of the motor (4) from that of the rotary link element (7) over a predetermined free-wheeling angular range.

4. Locking device according to claim 3, **characterised in that** the rotary free-wheel comprises a rotatable entraining element (6) which can be driven by the motor (4) and comprises at least one entraining stop (12) which can be brought into entraining engagement with a counter-stop (25) of the rotary link element (7) at either end of the free-wheeling angular range.

5. Locking device according to claim 4, **characterised in that** the entraining element (6) is arranged within the rotary link element (7) at least in part.

6. Locking device according to any of the preceding claims, **characterised in that** the guide link (18, 18') of the rotary link element (7) comprises at least one non-inclined zero-lift portion (19, 20, 20a, 20b) which extends at right angles to the rotational axis.

7. Locking device according to any of the preceding claims, **characterised in that** the motor (4), entraining element (6) and rotary link element (7) are arranged in succession along a common rotational axis (57).

8. Locking device according to any of the preceding claims, **characterised in that** the rotary link element (7) is connected to an emergency rotary element (26) for manually rotating the rotary link element (7).

9. Locking device according to any of the preceding claims, **characterised in that** the slide element (36) can be moved in parallel with the rotational axis (57) of the rotary link element (7).

10. Locking device according to any of the preceding claims, **characterised in that** the slide element (36) is arranged so as to be adjacent to the motor (4).

11. Locking device according to any of the preceding claims, **characterised in that** the slide element (36) comprises at least one locking-bolt guide link (38), and **in that** the locking bolt (32) is movably mounted relative to the slide element (36) and is in engagement with the locking-bolt guide link (38) such that the locking bolt (32) can be moved in and out of locking engagement with the plug (52) or the socket (43, 43', 43") by a movement of the slide element (36).

12. Locking device according to any of the preceding claims, **characterised in that** at least one locking bolt (33) is rigidly attached to the slide element (36).

## Revendications

1. Dispositif de verrouillage pour verrouiller des connecteurs électriques mâles dans des douilles (43, 43', 43") comprenant
- un moteur (4),
- un élément rotatif susceptible d'être mis en rotation par le moteur (4)
- un élément poussoir (36) en liaison fonctionnelle avec l'élément rotatif,
- au moins un goujon de verrouillage (32, 33) qui est déplaçable par l'élément poussoir (36) entre une position de déverrouillage et une position de verrouillage dans laquelle le connecteur (52) est verrouillé par rapport à la douille (43, 43', 43 "),
**caractérisé en ce que** l'élément rotatif est réalisé sous forme d'élément de coulisse rotatif (7) qui présente une coulisse de guidage (18, 18') agencée autour de son axe de rotation, avec plusieurs tronçons de coulisse (19, 20, 20a, 20b, 21, 22, 41a, 41b) qui ont différentes inclinaisons, et **en ce que** l'élément poussoir (36) présente une pièce d'engagement de coulisse (37) s'engageant dans la coulisse de guidage (18, 18') et qui, par rotation de l'élément de coulisse rotatif (7), peut être déplacée parallèlement à l'axe de rotation de l'élément de coulisse rotatif (7).

2. Dispositif de verrouillage selon la revendication 1, **caractérisé en ce que** le moteur (4) est constitué par un groupe motoréducteur qui présente un engrenage planétaire (9) pour la démultiplication de la vitesse de rotation du moteur.

3. Dispositif de verrouillage selon la revendication 1 ou 2, **caractérisé en ce qu'**entre le moteur (4) et l'élément de coulisse rotative (7) est prévue une roue libre qui découple le mouvement de rotation du moteur (4) de celui de l'élément de coulisse rotative (7) sur une plage angulaire prédéterminée de roue libre.

4. Dispositif de verrouillage selon la revendication 3, **caractérisé en ce que** la roue libre comprend un élément entraîneur (6) rotatif susceptible d'être entraîné par le moteur (4), qui comporte au moins une butée d'entraînement (12) qui, aux deux extrémités de la plage angulaire de roue libre, peut être amenée en engagement d'entraînement avec une contrebutée (25) de l'élément de coulisse rotatif (7).

5. Dispositif de verrouillage selon la revendication 4, **caractérisé en ce que** l'élément entraîneur (6) est agencé au moins partiellement à l'intérieur de l'élément de coulisse rotatif (7).

6. Dispositif de verrouillage selon l'une des revendications précédentes, **caractérisé en ce que** la coulisse de guidage (18, 18') de l'élément de coulisse rotatif (7) présente au moins un tronçon à course nulle (19, 20, 20a, 20b) exempt d'inclinaison qui s'étend perpendiculairement à l'axe de rotation.

7. Dispositif de verrouillage selon l'une des revendications précédentes, **caractérisé en ce que** le moteur (4), l'élément entraîneur (6) et l'élément de coulisse rotatif (7) sont agencés les uns derrière les autres le long d'un axe de rotation (57) commun.

8. Dispositif de verrouillage selon l'une des revendications précédentes, **caractérisé en ce que** l'élément de coulisse rotatif (7) est relié à un élément rotatif de secours (26) pour la rotation manuelle de l'élément de coulisse rotatif (7).

9. Dispositif de verrouillage selon l'une des revendications précédentes, **caractérisé en ce que** l'élément poussoir (36) peut être déplacé parallèlement à l'axe de rotation (57) de l'élément de coulisse rotatif (7).

10. Dispositif de verrouillage selon l'une des revendications précédentes, **caractérisé en ce que** l'élément poussoir (36) est agencé au voisinage du moteur (4).

11. Dispositif de verrouillage selon l'une des revendications précédentes, **caractérisé en ce que** l'élément poussoir (36) présente au moins une coulisse de guidage de goujon de verrouillage (38) et **en ce que** le goujon de verrouillage (32) est monté à déplacement par rapport à l'élément poussoir (36) et est en engagement avec la coulisse de guidage de goujon de verrouillage (38) de telle sorte que le goujon de verrouillage (32) est mobile en engagement de verrouillage ou hors d'engagement de verrouillage avec le connecteur (52) ou la douille (43, 43', 43") par un déplacement de l'élément poussoir (36).

12. Dispositif de verrouillage selon l'une des revendications précédentes, **caractérisé en ce qu'**au moins un goujon de verrouillage (33) est monté fixe sur l'élément poussoir (36).
